# EUROPEAN PATENT APPLICATION

(11) **EP 4 803 890 A1**
(43) Date of publication of application: **09.09.2026**
(21) Application number: 25162421.9
(22) Date of filing: 07.03.2025
(51) Int. Cl.: G01N 23/085

(54) **APPARATUSES AND METHODS FOR X-RAY SPECTROSCOPY**

(71) Applicant: Malvern Panalytical B.V., 7602 EA Almelo (NL)
(72) Inventor: WEIJERS, Sander, Almelo (NL); GATESHKI, Milen, Almelo (NL)
(74) Representative: Elkington and Fife LLP

(57) **Abstract**

The invention provides an X-ray analysis apparatus (100) and method for carrying out X-ray absorption spectroscopy, XAS, on a sample (107). The apparatus (100) and method involve a position-sensitive X-ray detector (105). In some aspects, counting the number of X-ray photons arriving at the X-ray detector (105) comprises correcting for charge sharing events in which an incident X-ray photon is detected at both the first detector segment (106) and the second detector segment (106). It also comprises only counting X-ray photons having energies within predetermined energy range. In some aspects, the X-ray detector (105) and the X-ray source (101) are scanned over an angular range during the XAS measurement.

## Description

### FIELD OF THE INVENTION

The present invention relates, in some aspects, to apparatuses and methods for X-ray absorption spectroscopy. In particular, the present invention relates to apparatuses and methods capable of delivering high-quality X-ray absorption spectroscopy measurements. The present invention further relates to computer program products for controlling an apparatus to carry out a method of X-ray absorption spectroscopy. In some aspects, the invention relates to apparatuses and methods for X-ray emission spectroscopy capable of delivering high-quality X-ray emission spectroscopy measurements.

### BACKGROUND

X-ray absorption spectroscopy (XAS) is an analytical technique that can be used to investigate the composition of materials; it can be used to obtain information relating to the atomic and electronic structure. XAS facilitates the investigation of atomic arrangements, oxidation states and bonding and is used in various fields including chemistry, materials science, biology and environmental science.

A sample can be analysed by irradiating the sample with X-rays. XAS involves measuring how much of an X-ray beam, incident of the sample, is absorbed by the sample at different wavelengths/energies. An absorption spectrum, indicating how absorption varies with the wavelength/energy of incident X-rays, is obtained. Constituent elements can be identified based on the presence of corresponding absorption edges in the absorption spectrum. The term "absorption edge" refers to the abrupt increase in absorption at the energy needed to remove a core electron from an atom. Since each element has a unique absorption edge, XAS enables element-specific analysis.

X-ray emission spectroscopy (XES) is another analytical technique for investigation the composition of materials. In XES, fluorescent X-rays emitted from a sample after it is excited by a primary X-ray beam are analysed. XES can provide detailed information about the chemical composition, electronic structure, and oxidation states of elements within the sample by measuring the energy and intensity of the emitted X-rays.

It would be desirable to provide an XAS apparatus and method capable of achieving high quality analysis results. It would also be desirable to provide an XES apparatus and method capable of achieving high quality analysis results. In particular, it would be desirable to achieve good spectral resolution and a high signal to noise ratio. Further, it would be desirable to facilitate convenient, cost-efficient and time-efficient analysis.

### SUMMARY OF THE INVENTION

The invention is defined by the claims. According to examples in accordance with a first aspect of the invention, there is provided an X-ray analysis apparatus for carrying out X-ray absorption spectroscopy on a sample. The apparatus comprises:
a wavelength selector arranged to receive an input X-ray beam and to output an output X-ray beam, wherein the output X-ray beam comprises a selection of wavelengths present in the input X-ray beam;
an X-ray detector for detecting X-rays from the sample, the X-ray detector comprising a first detector segment and a second detector segment, each of the first detector segment and the second detector segment being configured to convert incoming X-ray photons into respective electrical pulses;
one or more readout circuits, coupled to the X-ray detector; and
a detection processor configured to process signals generated by the one or more readout circuits to count a number of X-ray photons arriving at the X-ray detector, wherein counting the number of X-ray photons arriving at the X-ray detector comprises correcting for charge sharing events in which an incident X-ray photon is detected at both the first detector segment and the second detector segment;
wherein counting the number of X-ray photons arriving at the X-ray detector comprises counting X-ray photons having energies within a detection window corresponding to a first energy range and discounting X-ray photons having energies outside of the first energy range.

The X-ray analysis apparatus is configured to carry out X-ray absorption spectroscopy analysis in transmission mode. Transmission mode refers to a measurement mode in which the intensity of incident X-ray transmitted by the sample is measured (as opposed to measurement modes in which the sample is excited by incident X-rays and the intensity of fluorescent X-rays emitted by the sample is measured).

To carry out X-ray absorption spectroscopy analysis, a wavelength selector is arranged relative to the sample such that the X-ray detector receives, in each detector segment, a substantially monochromatic beam of X-rays (e.g., each detector segment receives X-rays having energies within a range of 5 eV or less) from the sample. The detection processor is configured to count X-ray photons having energies within a particular energy range - for example, the detection processor may be configured to count X-ray photons having energies within an energy range of interest and/or the range of wavelengths selected by the wavelength selector (e.g., about 100-200 eV) and/or within a range corresponding to the energy resolution of the X-ray detector (e.g., less than 1 keV, such as 300 eV).

By providing an apparatus in which the detection processor is configured to take account of charge sharing events (i.e., instances in which a single photon is detected in multiple detector segments), highly accurate measurements can be obtained in a time-efficient (and therefore cost-efficient) manner.

The wavelength selector may, for example, comprise a crystal monochromator.

The X-ray analysis apparatus may further comprise:
an X-ray tube for irradiating the sample with an incident X-ray beam; and
an actuator arrangement for adjusting the angular position of the X-ray tube and the X-ray detector relative to the wavelength selector.

The actuator arrangement may comprise a goniometer, wherein the X-ray tube and the X-ray detector are mounted to the goniometer and the wavelength selector is arranged at the centre of the goniometer.

The goniometer may comprise a first goniometer arm and a second goniometer arm, wherein the first goniometer arm and the second goniometer arm are configured to rotate about a goniometer centre. The X-ray tube may be mounted to the first goniometer arm, the X-ray detector may be mounted to the second goniometer arm and the wavelength selector may be positioned at the goniometer centre. The arms of the goniometer are rotatable about a common rotation axis (the "centre" of the goniometer).

In some embodiments, the angular positions of the X-ray tube and the X-ray detector relative to the wavelength selector may be adjusted, using the goniometer, by changing the positions of the first goniometer arm and the second goniometer arms (e.g., to carry out a θ-θ scan - that is, a scan in which the angle of incidence and the angle of detection are kept the same as one another and varied simultaneously). In some other embodiments, the angular positions of the X-ray tube and the X-ray detector relative to the wavelength selector may be adjusted, using the goniometer, by keeping the first goniometer arm in a fixed position and changing the position of the second goniometer arm in combination with adjusting the orientation of the wavelength selector (e.g., to carry out a θ-2θ scan).

The sample may be arranged between the X-ray source and the wavelength selector or between the wavelength selector and the X-ray detector.

A divergence slit may be arranged between the X-ray source and the sample. Alternatively, when the sample is arranged between the X-ray source and the wavelength selector, the divergence slit may be arranged between the wavelength selector and the sample. The divergence slit may be controlled to define a constant width of the incident X-ray beam on the sample during the XAS measurement. The width of the incident X-ray beam may be controlled, using the divergence slit, to match the active length of the X-ray detector (the active length being the length defined by active detection segments).

The X-ray tube may be configured to be operable at an X-ray tube voltage of at least 20 kV and at an X-ray tube power of at least 0.4 kW and/or the energy resolution of the X-ray detector may be equal to or less than 1 keV.

Providing a detection processor configured to correct for charge-sharing events facilitates the use of an X-ray tube having a relatively high X-ray tube voltage (and therefore a relatively high X-ray tube power). Accordingly, it is possible to use the apparatus to obtain high intensity measurements over a relatively short time period, such that the apparatus facilitates both time efficient and high accuracy measurements.

The X-ray analysis apparatus may further comprise a controller, wherein the controller is configured to control the detection processor to adjust the energy range of the detection window.

In this way, the X-ray analysis apparatus can be used to obtain accurate intensity measurements over a broad energy spectrum. The detection processor may output intensity data as a function of X-ray energy (or as a function of wavelength corresponding to X-ray energy, or any other parameter corresponding to X-ray energy/wavelength such as diffraction angle or detector segment position).

The controller may be further configured to:
change the position of the X-ray tube and the X-ray detector relative to the wavelength-selector to change the wavelengths of the output X-ray beam; and
adjust the energy range of the detection window (the "energy window") in synchrony with the position of the X-ray tube and the X-ray detector and optionally the wavelength selector configuration (e.g., the wavelength selector configuration may indicate the type of monochromator used, for example the type of crystal monochromator and the reflection order/plane of reflection used).

Synchronising the energy range of the detection window with the wavelengths of the output X-ray beam may help to provide convenient XAS analysis.

The X-ray analysis apparatus may further comprise an analysis module configured to compute an absorption spectrum and/or an absorption coefficient based on intensity measurements from the X-ray detector (via the detection processor).

The absorption coefficient may be calculated based on intensity measurements obtained with the sample arranged to receive X-rays from the X-ray tube and intensity measurements obtained without the sample.

The X-ray detector may comprise a one-dimensional array of detector segments or a two-dimensional array of detector segments.

The X-ray detector is a position sensitive detector. A one-dimensional X-ray detector may comprise a single column of detector segments. In one example, a two-dimensional detector comprises multiple columns and rows of detector segments arranged in parallel to one another.

The one or more readout circuits may be configured to receive the electrical pulses from the first detector segment and the second detector segment and to generate one or more readout signals for the detection processor, and
the detection processor may be configured to analyse, based on the one or more readout signals, a first pulse generated by the first X-ray detector segment and a second pulse generated by the second detector segment, wherein analysing the first pulse and the second pulse comprises:
if a time delay between the first pulse and the second pulse is less than a predetermined time threshold, determining that a charge sharing event has occurred and discarding the first pulse and the second pulse.
In this way, X-ray photons associated with charge sharing events may be discarded (the photons are not counted).

The one or more readout circuits may be configured to receive the electrical pulses from the first detector segment and the second detector segment and to generate one or more readout signals for the detection processor,
the detection processor may be configured to analyse, based on the one or more readout signals, a first pulse generated by the first X-ray detector segment and a second pulse generated by the second detector segment, wherein analysing the first pulse and the second pulse comprises:
if a time delay between the first pulse and the second pulse is less than a predetermined time threshold, determining that a charge sharing event has occurred, and
determining which of the first pulse and the second pulse is the higher energy pulse, and
either (i) counting the higher energy pulse and discarding the lower energy pulse, or (ii) calculating a combined pulse by summing the first pulse and the second pulse and assigning the combined pulse to the detector segment corresponding to the higher energy pulse.

In a second aspect of the invention, there is provided a method of carrying out X-ray absorption spectroscopy on a sample. The method comprises:
receiving, from an X-ray detector, X-ray absorption spectroscopy intensity signals; and
processing the X-ray absorption spectroscopy intensity signals to correct for charge sharing events, wherein the X-ray detector comprises a first detector segment and a second detector segment configured to convert incoming X-ray photons into respective electrical pulses.

The method may be a method of carrying out XAS in transmission mode.

The method may further comprise:
providing one or more readout circuits configured to receive electrical pulses from the first detector segment and the second detector segment and to generate one or more readout signals for the detection processor, wherein processing the X-ray absorption spectroscopy signals to correct for charge sharing events comprises:
analysing, based on the one or more readout signals, a first pulse generated by the first X-ray detector segment and a second pulse generated by the second detector segment, wherein analysing the first pulse and the second pulse comprises:
if a time delay between the first pulse and the second pulse is less than a predetermined time threshold, determining that a charge sharing event has occurred and discarding the first pulse and the second pulse.

The method may further comprise:
providing one or more readout circuits configured to receive electrical pulses from the first X-ray detector segment and the second detector segment and to generate one or more readout signals for the detection processor, wherein processing the X-ray absorption spectroscopy signals to correct for charge sharing events comprises:
analysing, based on the one or more readout signals, a first pulse generated by the first X-ray detector segment and a second pulse generated by the second detector segment, comprising:
if a time delay between the first pulse and the second pulse is less than a predetermined time threshold, determining that a charge sharing event has occurred, and
determining which of the first pulse and the second pulse is the higher energy pulse, and
either (i) counting the higher energy pulse and discarding the lower energy pulse, or (ii) calculating a combined pulse by summing the first pulse and the second pulse and assigning the combined pulse to the detector segment corresponding to the higher energy pulse.

The predetermined time threshold may be determined based on the count rate of the X-ray intensity received in one detector segment. For example, if one photon is received on average every 50 microseconds, the probability that two photos detected within e.g., 1 microsecond of each other relate to a charge-shared event is very high.

In an example, the predetermined time threshold may be equal to or less than 10 microseconds.

The method may further comprise:
irradiating the sample with an incident X-ray beam; and
measuring X-ray intensity, by the X-ray detector, across a range of X-ray photon energies to obtain an X-ray intensity spectrum.

The above-described method may be carried out using the above-described apparatus.

In a third aspect of the invention, there is provided a computer program product comprising instructions which, when the program is executed by a computer, cause the computer to carry out the steps of the above-described method.

In a fourth aspect of the invention, there is provided an X-ray analysis apparatus for carrying out X-ray absorption spectroscopy on a sample, the apparatus comprising:
an X-ray source for irradiating the sample with an incident X-ray beam;
a wavelength selector arranged to receive an input X-ray beam and to output an output X-ray beam, wherein the output X-ray beam comprises a selection of wavelengths present in the input X-ray beam;
an X-ray detector for detecting X-rays from the sample, the X-ray detector comprising an array of detection segments;
an actuator arrangement for adjusting the angular position of the X-ray source and the X-ray detector relative to the wavelength selector;
a controller configured to control the actuator arrangement to adjust the angular position of the X-ray detector and/or the X-ray source to provide a continuous scan across an angular range;
one or more readout circuits coupled to the X-ray detector; and
a detection processor configured to process signals generated by the one or more readout circuits to count a number of X-ray photons arriving at the X-ray detector, wherein counting the number of X-ray photons arriving at the X-ray detector comprises counting X-ray photons having energies within a detection window corresponding to a first energy range and to discounting X-ray photons having energies outside of the first energy range.

In this aspect, the XAS analysis apparatus is configured to provide for continuous scanning since the X-ray source and/or the X-ray detector can be moved, with respect to the wavelength selector by the actuator arrangement, to continuously scan an angular range. This may facilitate the use of a relatively small X-ray detector, as compared to an apparatus in which XAS measurements are obtained with the X-ray detector remaining in the same position. Additionally, enabling continuous scanning allows for the collection of more data points, which can improve the discretization of the measured signal making it possible to replicate the continuous more faithfully. For example, by obtaining more data points, the risk of the measured data missing narrow features is reduced.

The apparatus may be configured to carry out XAS analysis in transmission mode. Alternatively, the apparatus may be configured to carry out X-ray emission spectroscopy.

For measurements carried out in transmission mode, the actuator arrangement may be configured to rotate the X-ray tube and the X-ray source while the wavelength selector remains fixed in position (to perform a θ-θ scan). Alternatively, the actuator arrangement may be configured to rotate the wavelength selector and the X-ray detector. For example, the actuator arrangement may be used to perform a θ-2θ scan, wherein the X-ray detector is positioned to have a detection angle, 2θ, that is double the angle of incidence, θ. In a θ-2θ scan, the X-ray detector is rotated at twice the speed of the wavelength selector.

For X-ray emission spectroscopy measurements, the actuator arrangement may be configured to change the angular positions of the wavelength selector and the X-ray detector to carry out a θ-2θ scan. The position of the sample is fixed relative to the X-ray source.

Counting the number of X-ray photons arriving at the X-ray detector may further comprise correcting for charge sharing events (i.e., correcting for events in which an incident X-ray photon is detected at both the first detector segment and the second detector segment).

The actuator arrangement may comprise a goniometer having a pair of goniometer arms extend radially from a goniometer centre. The X-ray source and the X-ray detector may be mounted to respective goniometer arms and the wavelength selector may be positioned at the goniometer centre. The sample may be arranged between the X-ray source and the wavelength selector.

The X-ray source may comprise an X-ray tube configured to be operable at an X-ray tube voltage of at least 20 kV and at an X-ray tube power of at least 0.4 kW.

The energy resolution of the X-ray detector may be equal to or better than (i.e., it may have a value lower than) 1 keV.

The controller may be configured to control the detection processor to adjust the energy range of the detection window based on the angular position of the X-ray detector and/or the X-ray source and the wavelength selector configuration (e.g., the wavelength selector configuration may indicate the type of monochromator used, for example the type of crystal monochromator and the reflection order/plane of reflection used).

The X-ray analysis apparatus may further comprise an analysis module configured to compute an absorption spectrum and/or an absorption coefficient based on intensity measurements from the X-ray detector.

The X-ray detector may comprise a one-dimensional array of detector segments or a two-dimensional array of detector segments.

The X-ray detector may comprise a first detector segment and a second detector segment neighbouring the first detector segment. The one or more readout circuits may be configured to receive the electrical pulses from the first detector segment and the second detector segment and to generate one or more readout signals for the detection processor, and
the detection processor may be configured to analyse, based on the one or more readout signals, a first pulse generated by the first X-ray detector segment and a second pulse generated by the second detector segment, wherein the analysis comprises:
if a time delay between the first pulse and the second pulse is less than a predetermined time threshold, determining that a charge sharing event has occurred and discarding the first pulse and the second pulse. Photons associated with charge sharing events are discarded (the photons are not counted).

The one or more readout circuits may be configured to receive the electrical pulses from the first detector segment and the second detector segment and to generate one or more readout signals for the detection processor. The detection processor may be configured to analyse, based on the one or more readout signals, a first pulse generated by the first X-ray detector segment and a second pulse generated by the second detector segment. The analysis may comprise: if a time delay between the first pulse and the second pulse is less than a predetermined time threshold, determining that a charge sharing event has occurred, and determining which of the first pulse and the second pulse is the higher energy pulse, and either (i) counting the higher energy pulse and discarding the lower energy pulse, or (ii) calculating a combined pulse by summing the first pulse and the second pulse and assigning the combined pulse to the detector segment corresponding to the higher energy pulse.

In a fifth aspect of the invention, there is provided a method of carrying out X-ray absorption spectroscopy on a sample, the method comprising:
using an X-ray source to irradiate the sample with X-rays;
detecting X-rays from the sample using an X-ray detector, wherein detecting X-rays comprises continuously changing the angular position of X-ray detector; and
generating an absorption spectrum based on the X-ray intensities measured at different angular positions of the X-ray detector.

The method may comprise processing X-ray intensity data to count X-ray photons incident on the X-ray detector. Processing X-ray intensity data may comprise discounting X-ray photons having energies outside of a first energy range. Processing X-ray intensity data may comprise correcting for charge sharing events using any of the above-described methods for charge-sharing event correction.

The method may be carried out using the above-described XAS apparatus configured to obtaining XAS measurements using continuous scanning (i.e., the method may be carried out using the apparatus according to any of the embodiments of the fourth aspect of the invention). The method may comprise changing the first energy range based on the angular position of the X-ray detector and/or the X-ray source and/or the configuration of the wavelength selector.

In a sixth aspect of the invention, there is provided a computer program product comprising instructions which, when the program is executed by a computer, cause the computer to carry out the steps of the method according to the fifth aspect of the invention.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a schematic diagram of an apparatus for carrying out XAS, in transmission mode, according to some embodiments of the invention;
Figure 2 is a schematic diagram of an apparatus for carrying out XAS, in transmission mode, according to some embodiments of the invention;
Figure 3 is a schematic diagram illustrating an apparatus for carrying out XAS, in transmission mode, according to some embodiments of the invention;
Figure 4 is a plot showing experimental XAS data to compare the energy profile determined using a normal counting mode and the energy profile obtained in a charge-sharing suppression mode;
Figure 5 is a flowchart illustrating a method according to some embodiments of the invention;
Figure 6 is a flowchart illustrating a method according to some embodiments of the invention;
Figure 7 is a plot showing experimental XAS data collected from a 13 µm Vanadium foil sample;
Figure 8 is a plot showing some of the experimental XAS data of Figure 7 as an energy spectrum;
Figure 9 is a schematic diagram illustrating an apparatus for carrying out X-ray emission spectroscopy, according to some embodiments of the invention; and
Figure 10 is a diagram illustrating various operational modes for a position-sensitive X-ray detector.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

In one aspect, the invention provides an X-ray analysis apparatus for carrying out X-ray absorption spectroscopy on a sample. The X-ray analysis apparatus comprises a wavelength selector arranged to receive an input X-ray beam from an X-ray source and to output an output X-ray beam, wherein the output X-ray beam comprises a selection of wavelengths present in the input X-ray beam. A position-sensitive X-ray detector is arranged to detect X-rays from wavelength selector. Each of a first detector segment and a second detector segment is configured to convert incoming X-ray photons into respective electrical pulses. One or more readout circuits is/are coupled to the X-ray detector. A detection processor is configured to process signals generated by the one or more readout circuits to count a number of X-ray photons arriving at the X-ray detector. Counting the number of X-ray photons arriving at the X-ray detector comprises counting X-ray photons having energies within a detection window corresponding to a first energy range and to discounting X-ray photons having energies outside of the first energy range. Counting the number of X-ray photons arriving at the X-ray detector further comprises correcting for charge sharing events in which an incident X-ray photon is detected at both the first detector segment and the second detector segment.

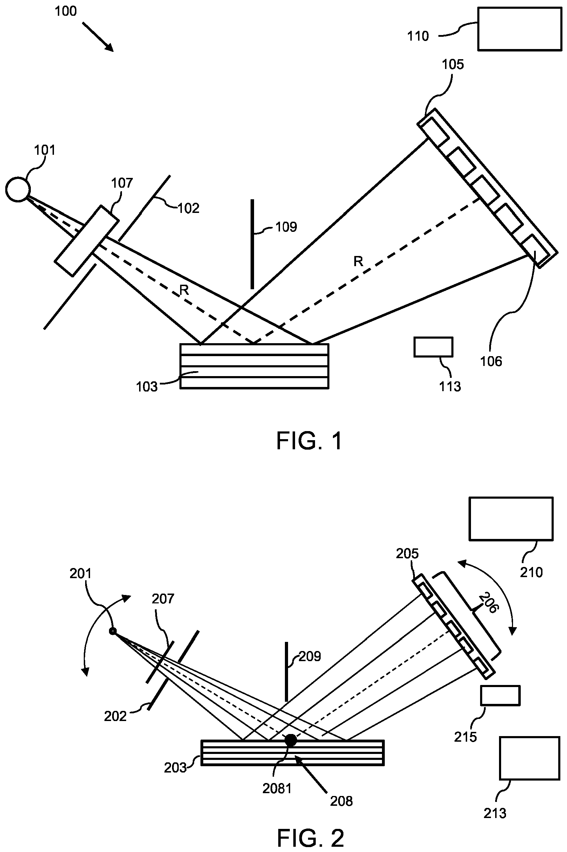

Figure 1 illustrates an example of an apparatus 100 for carrying out X-ray absorption spectroscopy on a sample 107. The apparatus 100 of Figure 1 comprises an X-ray source 101, a divergence slit 102, a wavelength selector 103 and an X-ray detector 105 comprising a 1D array of detector segments 106. The X-ray detector 105 is, for example, a silicon strip detector comprising multiple detection strips 106. The X-ray source 101 is configured to emit a polychromatic X-ray beam towards the sample 107. In use, the sample 107 to be analysed is positioned either between the X-ray source 101 and the wavelength selector 103 (as shown in Figure 1) or between the wavelength selector 103 and the X-ray detector 105. A beam knife 109 is arranged between the X-ray source 101 and the X-ray detector 105 to reduce the effect of background radiation.

The apparatus 100 of Figure 1 is configured to carry out an XAS measurement in a static mode. Static mode refers to a measurement mode in which the positions of the X-ray source 101, wavelength selector 103 and the X-ray detector 105 either remain unchanged for the duration of the XAS measurement, or in which the XAS measurement involves obtaining intensity data at several discrete fixed positions of the X-ray source 101, wavelength selector 103 and the X-ray detector 105. Accordingly, the apparatus 100 of Figure 1 is configured such that the relative positions of the X-ray source 101, wavelength selector 103 and X-ray detector 105 are fixed during the XAS measurement.

To measure the absorption spectrum of the sample 107, the X-ray source 101 is operated to irradiate the sample 107. X-rays transmitted by the sample 107 are dispersed by the wavelength selector 103 so that each strip 106 of the X-ray detector 105 receives substantially monochromatic radiation. The intensities measured at each strip 106 are recorded as a function of angular position (which corresponds to wavelength/energy) to obtain an absorption spectrum across the range of wavelengths/energies diffracted by the wavelength selector 103.

In more detail, during the XAS measurement, the X-ray source irradiates the sample 107 with polychromatic X-ray radiation and the wavelength selector 103 receives the X-rays from the sample as an input X-ray beam. Some of the incident wavelengths are diffracted by the wavelength selector 103 towards the X-ray detector. The wavelength selector 103 outputs X-rays of different wavelength at different output angles. The incident angle of the incident X-ray with respect to the diffracting planes of the wavelength selector 103 is equal to the output angle of the diffracted X-ray (as defined with respect to the diffracting planes of the wavelength selector 103).

The wavelength selector 103 comprises a flat crystal monochromator. Due to the divergence of the incident X-ray beam, different parts of the incident X-ray beam are incident on the wavelength selector 103 at different incident angles. Accordingly, the wavelength selector 103 outputs multiple output X-ray beams, the different output X-ray beams having different wavelengths and being incident on corresponding regions of the X-ray detector 105 (which regions may comprise one or multiple neighbouring detector segments 106). In this way, intensity is measured for multiple wavelengths, simultaneously.

In the arrangement of Figure 1, the X-ray detector 105 is shown to be communicatively coupled to a detection processor 110 (however, the detection processor 110 may alternatively be integrated in the X-ray detector). The detection processor 110 is configured to count X-ray photons incident on the X-ray detector 105 in order to measure intensity (cps). The detection processor 110 is configured to discard (discount) X-ray photons that are deemed invalid. The detection processor 110 discards X-ray photons having energies outside of a predetermined energy range (which energy range may be referred to as "the detection window"). The detection window may be defined by a single threshold (e.g., energies above a pre-determined threshold value) or it may be defined as the range of energies between a lower limit and an upper limit. The detection window may correspond to the range of energies for which the XAS measurements is being conducted (e.g., reflecting an energy-range of interest). That is, the upper and lower limit of the detection window may be determined based on the upper and lower limits of the XAS spectrum to be measured. In some embodiments in which the XAS measurements are conducted in scanning mode, the detection window may be adjusted dynamically based on the position of the X-ray detector (as discussed in further detail below).

Using a position sensitive X-ray detector 105 makes it possible to simultaneously record X-ray intensity across a range of X-ray energies such that intensity can be measured across an energy/wavelength spectrum without the need (or while reducing the need) to reconfigure the apparatus during the XAS measurement, thereby reducing the amount of time required to measure the XAS spectrum of a sample. However, the inventors have recognised that the use of position sensitive X-ray detectors in XAS measurements can give rise to inaccuracies in measurement data. When an X-ray photon in incident on the X-ray detector 105 across the boundary separating neighbouring detection segments, the X-ray apparatus may erroneously infer that multiple lower energy X-ray photons irradiated the X-ray detector (this may be referred to as the "charge sharing effect"). In a solid-state X-ray detector, every incoming X-ray photon is detected by the X-ray detector because the X-ray photon interacts with the X-ray detector to create a charge cloud. The charge cloud is detected by the X-ray detector as an electric pulse. When the charge cloud produced by an incident X-ray photon is spread across multiple neighbouring detection segments. each detection segment that receives a part of the electron charge, records an X-ray photon (the recorded X-ray photon having an energy proportional to the number of electrons generated within that respective detection segment).

In that regard, as discussed above, the wavelength selector comprises a crystal monochromator. Crystal monochromators rely on the phenomenon of Bragg diffraction, which occurs when X-rays interact with the periodic lattice planes in a crystalline material. When using a wavelength selector that relies on Bragg diffraction for monochromatizing, the Bragg condition may be fulfilled simultaneously for several energies (sometimes called harmonics). These harmonic X-ray photons contribute to background radiation, which may negatively impact the signal-to-background ratio. Additionally, in an apparatus comprising position-sensitive X-ray detector, due to the charge-sharing effect, harmonics could potentially be recorded as multiple lower-energy photons.

Some other examples of potential sources of background radiation include characteristic lines from the X-ray tube anode, air scattering, and fluorescence effects. These sources of background radiation might also result in inaccuracies due to the charge-sharing effect.

One approach to mitigate for potential inaccuracies arising from the charge-sharing effect in XAS measurements is to use a low-voltage - e.g., less than 20 kV - X-ray tube to avoid generating higher energy X-rays from the spectrum of the incident X-ray beam. However, the use of lower power X-ray tubes typically results in low measurement intensity for a given measurement duration. Using low-voltage X-ray tubes may therefore either negatively impact the achievable time-efficiency and/or the signal-to-noise ratio. While the X-ray tube power can be increased by providing a high operating current, this generally requires the use of an X-ray tube specifically designed for that purpose. Use of an X-ray tube designed to be operated at a low accelerating voltage and high current is relatively inconvenient and less cost effective since it restricts the operational flexibility of the apparatus (that is, the use of a low voltage-high current X-ray tube may prevent the apparatus from being reconfigured for use in other types of X-ray analysis - such as those typically used on X-ray diffractometers - without replacing the X-ray tube). In contrast, conveniently, XAS measurements that correct for charge-sharing events can be performed using non-specialised X-ray tubes. For example, XAS measurements can be carried out using an X-ray tube having an X-ray tube voltage of greater than 20 kV and an X-ray tube power of at least 0.4 kW. This may facilitate the use of one apparatus for multiple different X-ray analysis applications - for example, since XAS can now be carried out without requiring a low-voltage X-ray tube, the apparatus may be reconfigured to carry out powder X-ray diffraction analysis.

The inventors have realised that it is possible to carry out XAS achieving good spectral resolution with a high signal to noise ratio in a convenient, cost- and time-efficient way, by correcting for charge-sharing effects, as explained in more detail below.

The detection processor 110 processes signals generated by the detector segments 106 of the X-ray detector 105. The detection processor 110 is coupled to the detector segments 106 by at least one read out circuit; the detection processor 110 is configured to count the number of X-ray photons incident on each detector segment 106. As discussed above, the detection processor 110 is configured to count X-ray photons having energies within a predetermined range of values (i.e., the detection processor only counts X-ray photons having energies within a detection window). The detection window may correspond to the range of energies for which the XAS measurement is being conducted. The detection window may have a width of about 100-1000 eV, for example. By controlling the energy range of the detection window, it is possible to mitigate the contribution of background radiation and thereby improve the signal to noise ratio of the XAS measurement data.

The detection processor 110 is configured to correct for charge sharing events (occasions where an incident X-ray photon is detected at multiple detector segments). Charge sharing events are identified by determining, by the detection processor 110, whether the X-ray photons have been detected simultaneously by calculating a time delay between the pulses generated by the neighbouring pixels. If the time delay is within a predetermined threshold, the pulses are treated as being detected simultaneously.

Once a charge sharing event has been identified, the process for correcting for charge-sharing may be referred to as "Neighbour Pixel Inhibition mode", "Charge Summing mode" or "Charge Sharing Suppression mode". In Neighbour Pixel Inhibition mode, the X-ray photon with the highest energy is counted. The other X-ray photons are not counted (they are discarded). In Charge Summing mode, the pulses corresponding to different detector segments are summed together and assigned to the detector segment corresponding to the highest amplitude pulse. In Charge Sharing Suppression mode, all the pulses corresponding to the simultaneously detected X-ray photons are discarded. The probability that photon counts with incorrect energy due to partial collection of charge will be included in the measurement is lowest in Charge Sharing Suppression mode.

The apparatus 100 may comprise additional components for reducing parasitic scattering. For example, in Figure 1, the divergence slit 102 is arranged between the sample 107 and the wavelength selector 103 such that input X-ray beam is restricted to irradiating the surface of the wavelength selector 103. Additionally, a beam knife 109 is arranged to reduce/prevent parasitic scattering (e.g., from air scattering or from X-ray apparatus components arranged in the incident beam path) from reaching the X-ray detector 105.

The apparatus 100 further comprises an analysis module 113. The analysis module 113 may be communicatively coupled to the detection processor 110 by a wired or wireless connection. The analysis module 113 is configured to generate an absorption spectrum based on the XAS measurement data generated by the detection processor 110. Additionally, the analysis module 113 may be configured to calculate an absorption coefficient.

Figure 2 illustrates another apparatus 200 for carrying out X-ray absorption spectroscopy. The apparatus 200 comprises an X-ray source 201 and an X-ray detector 205. The X-ray source 201 comprises an X-ray tube arranged to irradiate the sample with an incident, polychromatic, X-ray beam. In Figure 2, the X-ray detector 205 is a 1D X-ray detector 205. That is, the X-ray detector 205 comprises a linear array of sensing elements (detector segments) for detecting X-rays. For example, the X-ray detector 205 is a silicon strip detector. It will be appreciated that a 2D detector could be used in place of the 1D detector. A wavelength selector 203 is arranged between the sample 207 and the X-ray detector 205.

The wavelength selector 203 is positioned to receive X-rays from the sample 207 as an input X-ray beam and to output a plurality of output X-ray beams in which X-rays of different wavelengths are spatially separated from one another. The wavelength selector 203 comprises a flat crystal monochromator. As in the arrangement of Figure 1, the crystal monochromator may comprise multiple materials and crystal orientations, enabling the monochromator to work well with a range of X-ray wavelengths. For example, the crystal monochromator may comprise three crystal portions which can be selectively arranged in the beam path; for example, the crystal monochromator may comprise two Silicon portions and a Germanium portions, with respective orientations Si(111), Si(011) and Ge(111).

The X-ray detector 205 is positioned such that each detector segment 206 receives a substantially monochromatic X-ray radiation from the wavelength selector 203 (that is, as shown in Figure 2, different detector segments/regions of detector segments 206 of the X-ray detector receive X-rays of different wavelengths), facilitating the measurement of X-ray intensity as a function of wavelength/energy.

The arrangement of Figure 2 can be configured to operate in a θ-θ scanning mode or in a θ-2θ scanning mode. The term "scanning mode" refers to a measurement mode in which the positions of the X-ray source and the X-ray detector relative to the wavelength selector are changed during the XAS measurement. In particular, the angular positions of the X-ray source and the X-ray detector relative to the wavelength selector are varied throughout the XAS measurement.

As illustrated in Figure 2, in a θ-θ scanning mode, the goniometer 208 is used to change the position of the X-ray detector 205 and the X-ray source 201 over an angular range (as indicated by the arrows). When the apparatus is configured to operate in a θ-θ scanning mode, the X-ray source 201 and the X-ray detector 205 are each coupled to an actuator arrangement 208 comprising one or more actuators. A controller 215 is configured to control the actuator arrangement to scan the X-ray source 201 and the X-ray detector through a range of angular positions with respect to the wavelength selector 203. For example, the X-ray detector and the X-ray source 201 are each mounted to a respective arm of a goniometer, and the top surface of the wavelength selector 203 is arranged at the centre 2081 of the goniometer. In Figure 2, the X-ray detector 205 and the X-ray source 201 are each separated from the wavelength selector by a distance, R, corresponding to the radius of the goniometer 208. As discussed in further detail below, it will be appreciated that the X-ray source 201 and the X-ray detector 205 may be positioned at differing distances (R1 and R2, respectively) from the centre of the goniometer.

Since the X-ray detector 205 is moved during the XAS measurement, it is possible to carry out XAS with a smaller X-ray detector compared to XAS measurements conducted with a position-sensitive X-ray detector in static mode. That is, the XAS measurement can be conducted over the same energy spectrum using an X-ray detector with a relatively small detection angle (the angle "seen" by the array of detector segments) and the range of measurement can be extended beyond the size of the array of detector segments.

In general, in a scanning mode, by changing the angular positions of the X-ray source and the X-ray detector relative to the wavelength selector, X-ray intensity data can be collected over a larger area on the surface of the sample. In other words, by changing the position of the X-ray detector, it is possible to "see" a greater extent of the sample's volume by an X-ray beam with the same energy. During the scanning movement, X-ray beams with the same photon energy will pass through different points of the sample, thus effectively averaging the signal and producing measurements that are less sensitive to small variations in the sample concentration or thickness. At lower positions of the X-ray source and X-ray detector, an X-ray beam passes through the lower part of the sample and is detected at the upper end of the detector. As the X-ray source and X-ray detector move higher, a beam with the same photon energy (same angle of incidence on the crystal) will pass through the central part of the sample and is detected at the central part of the X-ray detector. Finally, at an even higher position of the X-ray source and the X-ray detector, a beam with once again the same energy will pass through the upper part of the sample and will be detected at the lower edge of the X-ray detector. The detection processor is configured to combine all the measured intensities received for a given angle of incidence and produce a single intensity value that corresponds to that angle (and therefore photon energy). In comparison, in static mode, each energy passes through a small portion of the sample (as compared to the size of the incident X-ray beam). If that portion of the sample happens to have a different thickness or a different concentration of the material of interest, the measured absorption for this energy will also change and the measured signal will not be correct.

The use of scanning mode also makes it possible to improve how faithfully the signal is measured. The angular position of the X-ray detector may be changed continuously, providing continuous scanning. During continuous scanning, X-ray intensity data obtained for each detector segment in the array of detector segments, can be processed by binning intensity measurements into bins associated with angular ranges smaller than the angular range corresponding to the detector segment. In this way it is possible to increase the number of data points in the XAS measurements which may therefore make it possible to see narrow features in the measured XAS spectrum.

The X-ray detector 205 is communicatively coupled to a detection processor 210. In general, in embodiments in which the X-ray detector 205 is configured to scan an angular range, the detection processor 210 may be configured to count X-ray photons having energies within a predetermined range of values. In some embodiments, the detection window may correspond to the range of energies for which the XAS measurement is being conducted (e.g., the detection window may span an energy range about 100-1000 eV wide). In some other embodiments, the detection processor 210 may be configured to adjust the detection window based on the angular position of the X-ray detector 205 and the wavelength selector configuration. In this way, the detection window can be tailored to the range of wavelengths/energies that the X-ray detector is expected to "see" at its current angular position. The wavelength selector configuration may refer to the type of crystal used by the wavelength selector and which reflection order (plane of reflection) is used.

The detection processor 210 is configured to output the XAS intensity data to an analysis module 213. The analysis module 213 is configured to determine composition information relating to the sample based on the XAS intensity data from the detection processor 210.

Embodiments in which the X-ray analysis apparatus is configured to operate in scanning mode may additionally provide for charge-sharing correction. That is, the detection processor may be configured to identify and correct for charge-sharing events in the same way described in connection with Figure 1.

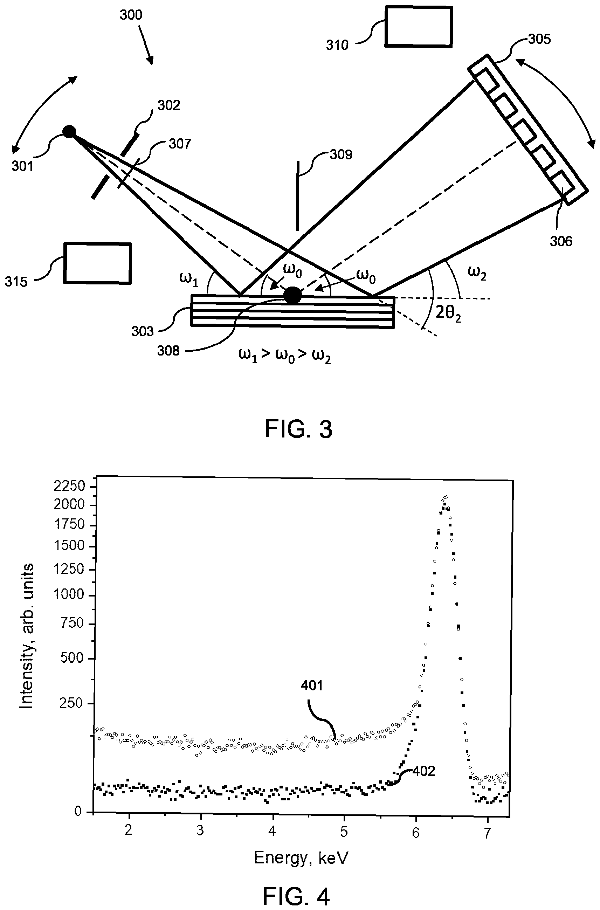

Figure 3 is a schematic diagram illustrating an embodiment of an XAS analysis apparatus according to a fourth aspect of the invention. The apparatus comprises an X-ray source 301 (e.g., an X-ray tube) arranged to irradiate the sample 307 with an incident, polychromatic, X-ray beam. A wavelength selector 303 is arranged to receive an input X-ray beam and to disperse the input X-ray beam into an output X-ray beam comprising a selection of wavelengths present in the input X-ray beam, wherein the different wavelengths are angularly separated from one another. An X-ray detector 305 is arranged to detect X-rays from the sample (via the wavelength selector 303). The X-ray detector 305 is a position sensitive X-ray detector and comprises an array of detection segments. One or more readout circuits is/are coupled to the X-ray detector 305.

The apparatus comprises an actuator arrangement 308 (e.g., goniometer) for adjusting the angular position of the X-ray source 301 and the X-ray detector 305 relative to the wavelength selector 303, in order to provide an angular X-ray intensity scan. The apparatus also comprises a controller 315 configured to control the actuator arrangement to adjust the angular position of the X-ray detector and the X-ray source to provide a continuous scan across an angular range.

The apparatus may be configured to carry out a continuous scan in a θ-θ scanning mode (by moving the X-ray detector 305 and the X-ray source 301) or in a θ-2θ scanning mode (by moving the X-ray detector 305 and the wavelength selector 303).

A detection processor 310 is configured to process signals generated by the one or more readout circuits to count a number of X-ray photons arriving at the X-ray detector, wherein counting the number of X-ray photons arriving at the X-ray detector comprises counting X-ray photons having energies within a detection window corresponding to a first energy range and to discounting X-ray photons having energies outside of the first energy range.

The XAS analysis apparatus 300 is configured to provide for continuous scanning since the X-ray source 301 (or the wavelength selector 303) and the X-ray detector 305 can be moved, by the actuator arrangement 308, to scan an angular range. As discussed above, this may facilitate the use of a relatively small X-ray detector, as compared to an apparatus in which XAS measurements are obtained with the X-ray detector remaining in the same position. Additionally, enabling continuous scanning allows for the collection of more data points, making it possible to reproduce the measured signal more faithfully

As previously mentioned, the XAS measurement data may be generated as X-ray intensity (cps) as a function of wavelength. The wavelength may be determined based on the position of the X-ray detector and, more particularly, the position of the detector segment. Generally, the wavelength of an X-ray incident on the X-ray detector can be determined according to its diffraction angle. The diffraction angle is calculated based on the position of the X-ray detector relative to the wavelength selector and the position of the detector segment in the array of detector segments according to the following formulae: ${ω}_{2} = {ω}_{0} + atan \left(\frac{{n}_{2} . p}{2 R}\right) \approx {ω}_{0} + \left(\frac{{n}_{2} . p}{2 R}\right)$ ${ω}_{2} = \frac{2 {θ}_{2}}{2}$ wherein 2θ₂ is the diffraction angle measured by the detector for a specific a wavelength λ₂, ω₀ is the angle between the central X-ray detected at detector segment n=0 and the crystal plane of the wavelength selector, ω₂ is the angle of between the X-ray detected at the detector segment and the crystal plane of the wavelength selector, R is the linear distance between the X-ray source/X-ray detector and the centre of the goniometer (e.g., the radius of the goniometer), n denotes the position of the detector segment in the array (wherein n is positive for the upper part of the detector and negative for the lower part of the detector) and p represents the width of the detector segment. These formulae assume that the crystal planes are orientated parallel to the surface of the wavelength selector. Although the wavelength selector is shown as being mounted symmetrically, it is possible to mount the wavelength selector asymmetrically without affecting performance.

Where the distance between the wavelength selector and the X-ray source, R1, differs to the distance between the wavelength selector and the X-ray detector, R2: ${ω}_{2} = {ω}_{0} + atan \left(\frac{{n}_{2} p}{R 1 + R 2}\right) \approx {ω}_{0} + \left(\frac{{n}_{2} p}{R 1 + R 2}\right)$

XAS in fluorescence mode also uses a different configuration, similar to the one shown in Figure 2. The sample is positioned behind a small slit and very close to the X-ray detector. A crystal monochromator is used to select a monochromatic X-ray beam which irradiates the sample. The X-ray detector collects the fluorescence radiation emitted by the sample in all directions.

Figure 4 is a plot showing an energy profile 401 in which charge sharing has not been accounted for and an energy profile 402 in which the intensity measurements have been processed to supress charge sharing. Figure 4 illustrates how the charge sharing effect can affect the accuracy of XAS measurement data. The first curve 401 represents intensity data obtained with an X-ray detector comprising an array of detection segments operated in "single pixel mode" (i.e., the signal from each pixel is processed independently, without taking into account the signal received by other pixels). The second curve 402 represents intensity data obtained with an X-ray detector operated in "charge sharing suppression mode". The intensity data for the first curve 401 includes a significant contribution from high energy photons (at 6.4 keV), which have been detected at lower energies in the range 1.5-5.5 keV.

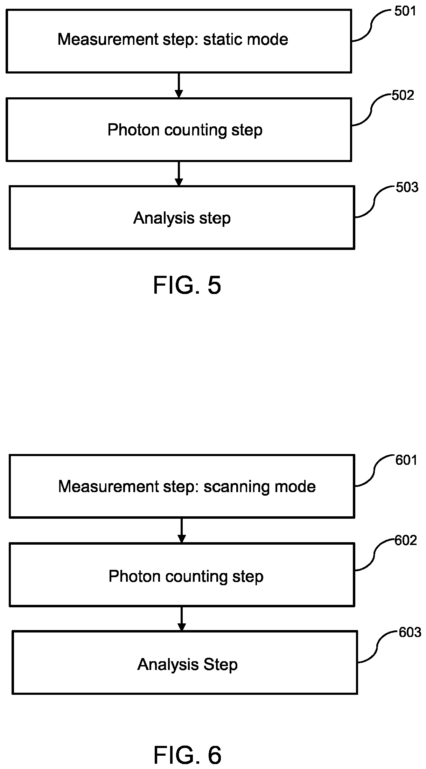

Figure 5 is a flowchart illustrating a method according to embodiments of the invention in which the apparatus is configured to carry out XAS analysis in a static measurement mode.

In a measurement step, 501, the X-ray source irradiates the sample. The wavelength selector receives X-rays from the sample, which it diffracts. X-rays from the sample are dispersed by the wavelength selector such that the X-ray detector receives a plurality of substantially monochromatic X-ray beams, the different X-ray beams irradiating different regions of the X-ray detector's array of detection segments. Each irradiated detection segment generates an electrical pulse in response to being irradiated by an X-ray photon.

In a photon counting step, 502, the detection processor processes the pulses generated by the X-ray detector. The processing includes determining whether the pulse corresponds to an X-ray photon having an energy within the first detection window, and discarding pulses that correspond to X-ray photons having energies outside of the first detection window. The processing further comprises identifying charge-sharing events and discarding electrical pulses deemed to relate to a charge-sharing event.

In a first analysis step, 503, an absorption spectrum is generated by plotting X-ray intensity (cps) against wavelength (Å) or energy (keV). Alternatively, or additionally, an absorption coefficient is calculated. The absorption coefficient may be calculated by taking the ratio of X-ray intensity at a particular wavelength/energy value to a reference X-ray intensity value. The reference X-ray intensity may be the X-ray intensity that would be measured at the same wavelength/energy value without the sample present. The reference X-ray intensity value may be determined by measuring X-ray intensity using the apparatus without the sample present.

Figure 6 is a flow chart illustrating a method of XAS according to embodiments of the invention. In the method of Figure 6, the apparatus of Figure 2 is used to carry out an XAS measurement wherein the X-ray detector is continuously scanned over an angular range.

In a measurement step, 601, the X-ray source irradiates the sample. The wavelength selector receives X-rays from the sample, which it diffracts. X-rays from the sample are dispersed by the wavelength selector such that the X-ray detector receives a plurality of substantially monochromatic X-ray beams, the different X-ray beams irradiating different regions of the X-ray detector's array of detection segments. Each irradiated detection segment generates an electrical pulse in response to being irradiated by an X-ray photon. The angular position of the X-ray source and the X-ray detector relative to the wavelength selector is changed to obtain an angular scan.

The X-ray intensity data is processed, by the detection processor. The processing comprises assigning the electrical pulses detected at the detection segments to angular bins (e.g., based on the angular position of the X-ray detector relative to the wavelength selector and the position of the detection element within the array of detection elements). The angular bins may correspond to a smaller angular range than the angular range of the detection segment.

In a photon counting step, 602, the detection processor processes the pulses generated by the X-ray detector. The processing includes determining whether the pulse corresponds to an X-ray photon having an energy within the first detection window and discarding pulses that correspond to X-ray photons having energies outside of the first detection window. It accumulates the intensity corresponding to the same angular position (energy) and collected by different detector segments for different positions of the detector.

The energy range of the first detection window may be adjusted during the measurement based on the position of the X-ray detector. Synchronising the detection window with the position of the X-ray detector can help to further improve the accuracy of the XAS measurement data. In more detail, based on the position of the X-ray detector relative to the wavelength selector, it may be expected that X-rays within a certain wavelength range will be received by the X-ray detector. Discarding X-rays having wavelengths/energies outside of that range can help to improve the signal to background ratio of the measurement data.

In some embodiments, the processing further comprises identifying charge-sharing events and discarding electrical pulses deemed to relate to a charge-sharing event.

In a first analysis step, 603, an absorption spectrum is generated by plotting X-ray intensity (cps) against wavelength (Å) or energy (keV). Alternatively, or additionally, an absorption coefficient is calculated. The absorption coefficient may be calculated by taking the ratio of X-ray intensity at a particular wavelength/energy value to a reference X-ray intensity value. The reference X-ray intensity may be the X-ray intensity that would be measured at the same wavelength/energy value without the sample present. The reference X-ray intensity value may be determined by measuring X-ray intensity using the apparatus without the sample present.

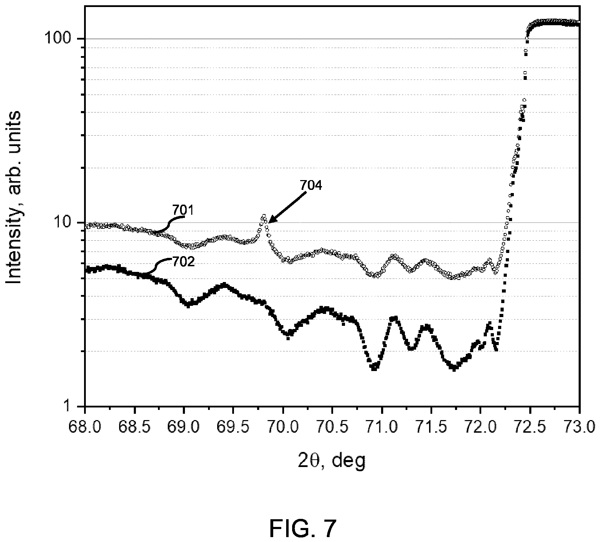

Figure 7 is a plot showing experimental XAS data obtained from a 13 µm Vanadium foil sample. Intensity (a.u.) is plotted as a function of 2 theta angle (°). The first curve 701 was obtained using a position sensitive detector in single pixel mode. The second curve 702 was obtained using the same detector in charge sharing suppression mode. Arrow 704 indicates a region in which the first curve 701 exhibits intensity resulting from parasitic scattering, which has been eliminated in curve 702 by the charge-sharing suppression algorithm.

It can be seen from Figure 7 that when the X-ray detector is operated in charge-sharing supression mode, the background level is significantly reduced compared to when the X-ray detector is operated in single pixel mode. Accordingly, XAS features are much easier to measure and analyze.

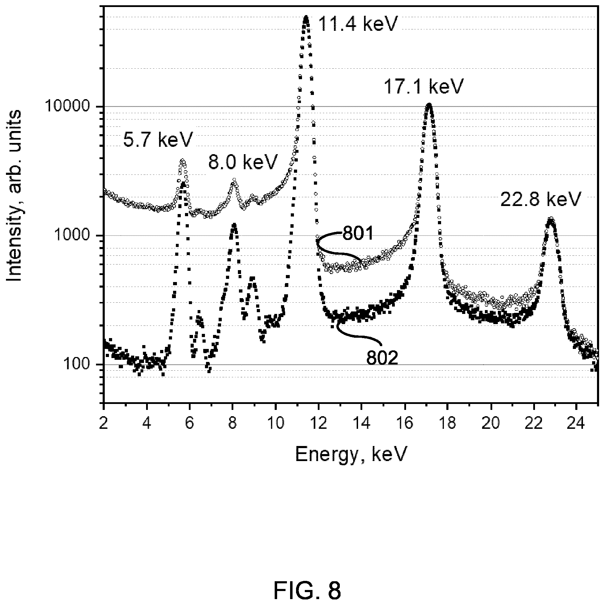

Figure 8 is a plot showing an energy spectrum collected from a 13 µm Vanadium foil sample. The data was obtained using the XAS apparatus in static mode and the detector covers the angular range between 69 and 71 degrees in Figure 7.

Intensity (a.u.) is plotted as a function of energy (keV). The first curve 801 was obtained using a position-sensitive X-ray detector in single pixel mode. The second curve 802 was obtained using the same position sensitive detector in charge sharing suppression mode. The peak at 5.7 keV corresponds to the energy of interest. The peak at 6.4 keV represent parasitic scattering as a result of Iron fluorescence. The peaks at 8.0 and 8.9 keV correspond to the characteristic lines of Copper (from the X-ray tube). The peaks at 11.4 keV, 17.1 keV and 22.8 keV result from contributions from higher harmonics reflected by the wavelength selector. It can be observed that in the energy range of interest around 5.7 keV, the background has been significantly reduced (more than 10 times) and correspondingly, the signal to noise ratio is improved.

In another embodiment according to the fourth aspect of the invention, the X-ray analysis apparatus 900 is configured to carry out X-ray emission spectroscopy (XES). The X-ray analysis apparatus comprises an X-ray source 901 and an X-ray detector 905 mounted to a goniometer. For example, the X-ray source and the sample 907 may both be fixed to the incident arm of the goniometer so that the sample is held in a fixed position relative to the X-ray source 901. The X-ray source 901 is configured to irradiate the sample 907 at a fixed incident angle. The incident X-ray beam passes through non-monochomatizing focusing optics 904 (e.g., a polycapillary) positioned between the X-ray source 901 and the sample 907, to irradiate a small area on the sample (e.g., the height of the beam at the point where it hits the sample is equal to or less than 100 microns). Fluorescent X-rays emitted by the sample 907 are incident on an X-ray detector 905, via a wavelength selector 903 positioned at the centre 908 of the goniometer. The sample is scanned, continuously, by adjusting the angular position of the wavelength selector 903 and the X-ray detector 905. The wavelength selector angle is adjusted at half the rate of adjustment of the X-ray detector angle, to obtain a θ-2θ scan. The X-ray detector 905 obtains a scan of X-rays emitted from the sample for a broad spectrum of incident wavelengths. The detection processor 910 is configured to carry out charge-sharing correction (in the same way as for XAS in transmission mode to reduce background scattering, such as air scattering of fluorescence from other elements in the sample).

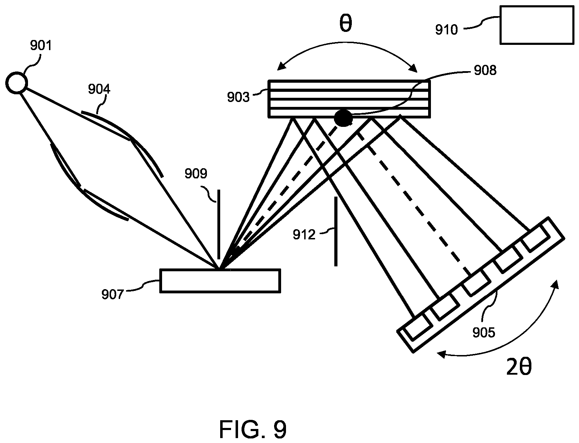

In Figure 9, a first beam knife 909 and a second beam knife 912 are positioned to prevent or reduce the amount of background scattering reaching the X-ray detector.

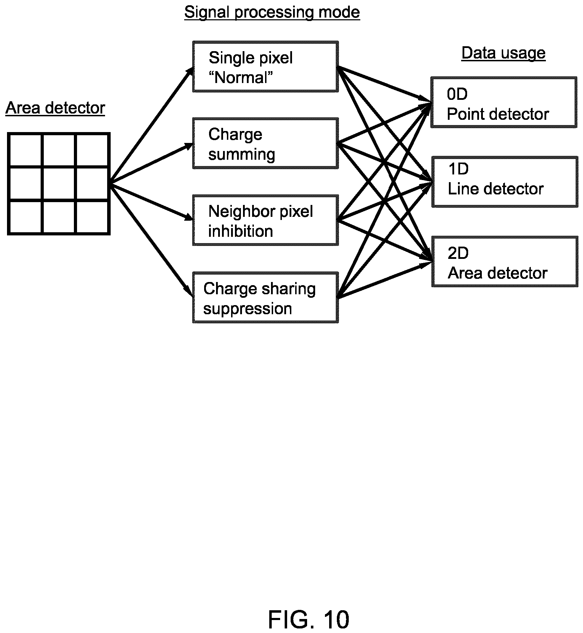

Figure 10 is a diagram illustrating different ways in which the signals from the X-ray detector can be processed by the detection processor to produce X-ray intensity data and different uses of the X-ray intensity data.

Figure 10 shows four different processing modes: Single Pixel mode, Neighbour Pixel Inhibition mode, Charge Summing mode and Charge Sharing Suppression mode. Single Pixel mode (which may instead be referred to as "normal" mode, when referring to a strip detector) refers to a mode in which the signal from each detection segment (pixel or strip) is processed individually, without accounting for the signal received in other pixels. In this mode, detection and correction of charge shared events is not possible. The other processing modes are implemented as described above.

In general, position sensitive X-ray detectors comprise an array of detector segments. In Figure 10, the X-ray detector comprises an array of pixels.

The X-ray detectors described herein can be operated as a 0D point detector (wherein the counts from all detection segments - strips or pixels - are combined). When the X-ray detector comprises an array of pixels, the X-ray detector can be operated as a 1D detector (wherein the counts from the pixels in one row are added together, emulating a strip detector) in or as a 2D detector (wherein the counts from each pixel are output individually as collected). Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". It is noted the term "arrangement" is intended to be equivalent to the term "system", and vice versa.

Any reference signs in the claims should not be construed as limiting the scope.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

The detection processor may be integrated in the X-ray detector. Alternatively, it may be provided as an external entity in wired or wireless connection with the X-ray detector.

As discussed above, some embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Referring to Figure 1, it will be appreciated that the presence of a beam knife and/or divergence slit is optional. Likewise, the presence of a beam knife in the arrangements illustrated in Figures 2, 3 and 9 is optional.

The sample may be in the form of a powder sample spread in a thin layer or pressed into a pellet. The apparatus may be used to analyse samples in the form of a powder, thin foil , liquid., etc.

In Figure 2, the X-ray source and the X-ray detector are each positioned on a respective arm of a goniometer. However, the X-ray analysis may not comprise a goniometer. Further, the X-ray source and the X-ray detector may be separated from the wavelength selector by different distances.

While the detection segments are illustrated as strip-shaped elements, it will be appreciated that the detection segments may not be elongate in shape (e.g., they may comprise square or hexagonal pixels).

The X-ray source may comprise an X-ray tube, liquid metal jet, plasma or other types of X-ray sources found in laboratory equipment.

The wavelength selector may comprise one or several crystal monochromators (also referred to as analyzer crystals"). The wavelength selector may comprise multiple different crystal materials and orientations that can be selected depending on the intensity and energy resolution that is required for the XAS measurement. The wavelength selector may alternatively comprise any other device capable of separating incoming X-rays into relatively narrow bands of X-ray wavelengths.

In general, the X-ray detector is a position sensitive X-ray detector. However, it may comprise a 1D X-ray detector (which comprises a linear array of detector segments) or a 2D X-ray detector which comprises an array of detector segments, the array including both rows and columns.

It will be appreciated that in embodiments in which the detection processor corrects for charge-sharing events, the detection processor may be configured to correct for charge-sharing events that span more than two neighbouring detector segments (for example, the charge cloud caused by an incident X-ray photon may simultaneously span three or four neighbouring detector segments).

Referring to Figures 1 to 3, it will be appreciated that the divergence slit can be positioned before the sample (between the X-ray source and the sample) or after the sample (between the sample and the wavelength selector).

In one aspect of the invention, the X-ray analysis apparatus comprises a position sensitive X-ray detector and a controller configured to control the X-ray analysis apparatus to scan the position sensitive X-ray detector over range of angular positions. In some embodiments of this aspect of the invention, the X-ray detector has an energy resolution better than 1 keV. In some embodiments according to this aspect of the invention, the X-ray analysis apparatus comprises a detection processor configured to correct for charge-sharing events. However, it will be appreciated that not all embodiments comprising a position sensitive X-ray detector that can be scanned over an angular range also involve correction of charge-sharing events.

## Claims

1. An X-ray analysis apparatus for carrying out X-ray absorption spectroscopy on a sample, the X-ray analysis apparatus comprising:
a wavelength selector arranged to receive an input X-ray beam and to output an output X-ray beam, wherein the output X-ray beam comprises a selection of wavelengths present in the input X-ray beam;
an X-ray detector for detecting X-rays from the sample, the X-ray detector comprising a first detector segment and a second detector segment, each of the first detector segment and the second detector segment being configured to convert incoming X-ray photons into respective electrical pulses;
one or more readout circuits, coupled to the X-ray detector; and
a detection processor configured to process signals generated by the one or more readout circuits to count a number of X-ray photons arriving at the X-ray detector, wherein counting the number of X-ray photons arriving at the X-ray detector comprises correcting for charge sharing events in which an incident X-ray photon is detected at both the first detector segment and the second detector segment;
wherein counting the number of X-ray photons arriving at the X-ray detector comprises counting X-ray photons having energies within a detection window corresponding to a first energy range and discounting X-ray photons having energies outside of the first energy range.

2. The X-ray analysis apparatus of claim 1 further comprising:
an X-ray tube for irradiating the sample with an incident X-ray beam; and
an actuator arrangement for adjusting the angular position of the X-ray tube and the X-ray detector relative to the wavelength selector.

3. The X-ray analysis apparatus of claim 2 further comprising a controller, wherein the controller is configured to control the detection processor to adjust the first energy range of the detection window.

4. The X-ray analysis apparatus of claim 3 wherein the controller is further configured to:
control the actuator arrangement to change the position of the X-ray tube and the X-ray detector relative to the wavelength selector; and
adjust the energy range of the detection window in synchrony with the position of the X-ray tube and the X-ray detector.

5. The X-ray analysis apparatus of claim 2 wherein: the X-ray tube is configured to be operable at an X-ray tube voltage of at least 20 kV and at an X-ray tube power of at least 0.4 kW and/or the energy resolution of the X-ray detector is equal to or less than 1 keV.

6. The X-ray analysis apparatus of any preceding claim further comprising an analysis module configured to compute an absorption spectrum and/or an absorption coefficient based on intensity measurements from the X-ray detector.

7. The X-ray analysis apparatus of any preceding claim wherein the X-ray detector comprises a one-dimensional array of detector segments or a two-dimensional array of detector segments.

8. The X-ray analysis apparatus of any preceding claim, wherein:
the one or more readout circuits are configured to receive electrical pulses from the first detector segment and the second detector segment and to generate one or more readout signals for the detection processor, and
the detection processor is configured to analyse, based on the one or more readout signals, a first pulse generated by the first detector segment and a second pulse generated by the second detector segment, wherein analysing the first pulse and the second pulse comprises::
if a time delay between the first pulse and the second pulse is less than a predetermined time threshold, determining that a charge sharing event has occurred and discarding the first pulse and the second pulse.

9. The X-ray analysis apparatus of any one of claims 1 to 7, wherein:
the one or more readout circuits are configured to receive the electrical pulses from the first detector segment and the second detector segment and to generate one or more readout signals for the detection processor,
the detection processor is configured to analyse, based on the one or more readout signals, a first pulse generated by the first detector segment and a second pulse generated by the second detector segment, wherein analysing the first pulse and the second pulse comprises:
if a time delay between the first pulse and the second pulse is less than a predetermined time threshold, determining that a charge sharing event has occurred, and
determining which of the first pulse and the second pulse is the higher energy pulse, and either (i) counting the higher energy pulse and discarding the lower energy pulse, or (ii) calculating a combined pulse by summing the first pulse and the second pulse and assigning the combined pulse to the detector segment corresponding to the higher energy pulse.

10. A method of carrying out X-ray absorption spectroscopy on a sample, the method comprising:
receiving, from an X-ray detector, X-ray absorption spectroscopy intensity signals; and
processing, by a detection processor, the X-ray absorption spectroscopy intensity signals to correct for charge sharing events, wherein the X-ray detector comprises a first detector segment and a second detector segment configured to convert incoming X-ray photons into respective electrical pulses.

11. The method of claim 10 further comprising:
providing one or more readout circuits configured to receive electrical pulses from the first detector segment and the second detector segment and to generate one or more readout signals for the detection processor, wherein processing the X-ray absorption spectroscopy intensity signals to correct for charge sharing events comprises:
analysing, based on the one or more readout signals, a first pulse generated by the first X-ray detector segment and a second pulse generated by the second detector segment, comprising:
if a time delay between the first pulse and the second pulse is less than a predetermined time threshold, determining that a charge sharing event has occurred and discarding the first pulse and the second pulse.

12. The method of claim 10, comprising:
providing one or more readout circuits configured to receive electrical pulses from the first X-ray detector segment and the second detector segment and to generate one or more readout signals for the detection processor, wherein processing the X-ray absorption spectroscopy signals to correct for charge sharing events comprises:
analysing, based on the one or more readout signals, a first pulse generated by the first X-ray detector segment and a second pulse generated by the second detector segment, comprising:
if a time delay between the first pulse and the second pulse is less than a predetermined time threshold, determining that a charge sharing event has occurred, and
determining which of the first pulse and the second pulse is the higher energy pulse, and
either (i) counting the higher energy pulse and discarding the lower energy pulse, or (ii) calculating a combined pulse by summing the first pulse and the second pulse and assigning the combined pulse to the detector segment corresponding to the higher energy pulse.

13. The method of any one of claims 10 to 12 further comprising:
irradiating the sample with an incident X-ray beam; and
measuring X-ray intensity, by the X-ray detector, across a range of X-ray photon energies to obtain an X-ray intensity spectrum.

14. The method of any one of claims 10 to 13 wherein the method is carried out using the X-ray analysis apparatus of any one of claims 1 to 9.

15. A computer program product comprising instructions which, when the program is executed by a computer, cause the computer to carry out the steps of any one of claims 10 to 12.
